# EUROPEAN PATENT APPLICATION

(11) **EP 3 104 258 A1**
(43) Date of publication of application: **14.12.2016**
(21) Application number: 16173327.4
(22) Date of filing: 07.06.2016
(51) Int. Cl.: G06F 3/01, H04L 29/08, H04L 29/06, H04W 4/00

(54) **BROADCAST HAPTICS ARCHITECTURES**

(30) Priority: 12.06.2015 US 201514738707
(71) Applicant: Immersion Corporation, San Jose, CA 95134 (US)
(72) Inventor: HAMAM, Abdelwahab, Montreal, Québec H2X 3R4 (CA); CRUZ HERNANDEZ, Juan Manuel, Westmount, Québec H3Z 1T1 (CA); SABOUNE, Jamal, Montreal, Québec H2T 1R2 (CA)
(74) Representative: Hofstetter, Schurack & Partner

(57) **Abstract**

A system for transferring haptic data from a live event to an end user device. A recorder is configured to record video data of a live event. A sensor is configured to sense a parameter associated with the live event and output the sensed parameter as sensor data. A transformer is configured to receive the sensor data from the sensor and transform the sensor data into a signal including haptic data that is associated with the live event. An end user device is configured to receive the haptic data from the transformer and configured to receive the video data of the live event. The end user device includes a haptic output device configured to generate a haptic effect to a user based on the haptic data and includes a display configured to display the video data.

## Description

### FIELD OF THE INVENTION

Embodiments hereof relate generally to multimedia content processing and presentation, and in particular, to enhancing audio-video content with haptic effects.

### BACKGROUND OF THE INVENTION

Haptic effects, commonly used in the video gaming industry, can provide tactile cues that enhance a user experience and make a virtual environment more interactive for users. For example, vibration effects, or vibrotactile haptic effects, may be useful in providing cues to users of electronic devices to alert the user to specific events, or provide realistic feedback to create greater sensory immersion within a simulated or virtual environment. A user's experience in viewing a live event, such as a sporting event, can be enhanced by adding haptic effects to the audio and video components of the live event. Embodiments hereof relate to architectures for transferring haptic data from a live event to an end user device.

### BRIEF SUMMARY OF THE INVENTION

Embodiments hereof relate a system for transferring haptic data from a live event to an end user device. The system includes a recorder, a sensor, a transformer, and an end user device. The recorder is configured to record video data of a live event. The sensor is configured to sense a parameter associated with the live event and output the sensed parameter as sensor data. The transformer is configured to receive the sensor data from the sensor and transform the sensor data into a signal including haptic data that is associated with the live event. The end user device is configured to receive the haptic data from the transformer and configured to receive the video data of the live event. The end user device includes a haptic output device configured to generate a haptic effect to a user based on the haptic data and includes a display configured to display the video data.

Embodiments hereof relate a system including a recorder, a sensor, an onsite transmission station, a transformer, and an end user device. The recorder is configured to record video data of a live event. The sensor is configured to sense a parameter associated with the live event and output the sensed parameter as sensor data. The onsite transmission station is located onsite to the live event. The onsite transmission station is configured to receive the video data of the live event and includes a processor for processing the video data of the live event. The transformer is configured to receive the sensor data from the sensor and transform the sensor data into a signal including haptic data that is associated with the live event. The end user device is configured to receive the haptic data from the transformer and configured to receive the processed video data from the processor of the onsite transmission station. The end user device includes a haptic output device configured to generate a haptic effect to a user based on the haptic data and includes a display configured to display the video data.

Embodiments hereof also relate to a method of transferring haptic data from a live event to an end user device. The video data of a live event is recorded. A parameter associated with the live event is sensed and the sensed parameter is output as sensor data. The sensor data from the sensor is received and the sensor data is transformed into a signal including haptic data that is associated with the live event. The haptic data is received at an end user device. The end user device includes a display configured to display the video data. The video data of the live event is received at the end user device. The end user device includes a haptic output device configured to generate a haptic effect to a user based on the haptic data. At least one haptic effect is generated with the haptic output device based on the haptic data, and the video data is displayed on the display.

### BRIEF DESCRIPTION OF DRAWINGS

The foregoing and other features and advantages of the invention will be apparent from the following description of embodiments hereof as illustrated in the accompanying drawings. The accompanying drawings, which are incorporated herein and form a part of the specification, further serve to explain the principles of the invention and to enable a person skilled in the pertinent art to make and use the invention. The drawings are not to scale.
FIG. 1 illustrates a simplified flow chart for transferring haptic data from a live event to an end user device.
FIG. 2 illustrates a more detailed flow chart including essential components utilized when transferring haptic data from a live event to an end user device, wherein the processed audio and/or video data and the haptic data are transmitted to the end user devices as separate or distinct signals.
FIG. 3 illustrates a more detailed flow chart including essential components utilized when transferring haptic data from a live event to an end user device according to another embodiment hereof, wherein the processed audio and/or video data and the haptic data are transmitted to the end user devices as a composite signal.
FIG. 4 is a block diagram of an end user device according to an embodiment hereof.
FIG. 5 is a block diagram of a multi-device system that may be used as an end user device in embodiments hereof, wherein the multi-device system includes a primary end user device and a secondary end user device.
FIG. 6 is an illustration of a broadcast haptics architecture according to an embodiment hereof, wherein transformation of haptic data occurs at an onsite processing or transmission station via manual insertion of haptic events.
FIG. 7 is an illustration of a broadcast haptics architecture according to another embodiment hereof, wherein transformation of raw sensor data into haptic data occurs after an onsite processing or transmission station but before arrival at the end user devices.
FIG. 8 is an illustration of a broadcast haptics architecture according to another embodiment hereof, wherein transformation of raw sensor data into haptic data occurs before or at an onsite processing or transmission station and distribution to the end user devices utilizes a central processing server.
FIG. 9 is an illustration of a broadcast haptics architecture according to another embodiment hereof, wherein transformation of raw sensor data into haptic data occurs before or at an onsite processing or transmission station and distribution to the end user devices does not utilize a central processing server.
FIG. 10 is an illustration of a broadcast haptics architecture according to another embodiment hereof, wherein transformation of raw sensor data into haptic data occurs at the sensor itself.
FIG. 11 is an illustration of a broadcast haptics architecture according to another embodiment hereof, wherein transformation of raw sensor data into haptic data occurs at the end user device.

### DETAILED DESCRIPTION OF THE INVENTION

Specific embodiments of the present invention are now described with reference to the figures, wherein like reference numbers indicate identical or functionally similar elements. The following detailed description is merely exemplary in nature and is not intended to limit the invention or the application and uses of the invention. Furthermore, there is no intention to be bound by any expressed or implied theory presented in the preceding technical field, background, brief summary or the following detailed description.

Embodiments hereof relate to architectures for transferring haptic data from a live event to an end user device in order to enable viewing of live video along with live haptic effects. Stated another way, architectures described herein are suitable to embed or include the haptic data with the live video and/or audio broadcast to enhance the user's experience. It is desirable to be able to record a video of a live event while at the same time record real-time aspects of the live event so that the real-time aspects of the event may be played back with the live video as haptic effects or sensations to provide an even more realistic and immersive experience for the user watching the live video. Recording real-time data from an object in a scene, and reproducing its experience haptically, is a more intuitive way of capturing or re-creating an experience when compared to offline artistic editing with programming tools and writing synchronization code to attempt to synchronize the haptic effects with the video. Further, recording and transforming real-world sensor data to produce haptic output is a more cost-efficient way to generate haptic content when compared to hand-authored synthesis of haptic signals.

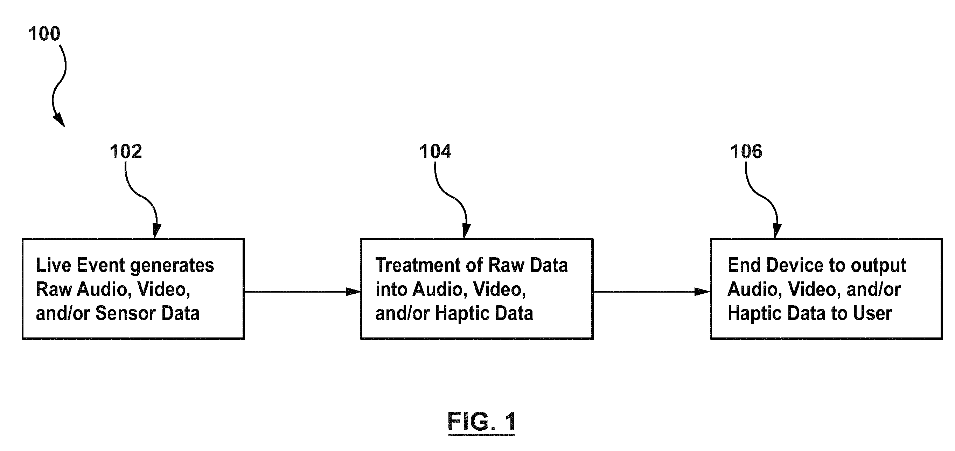

More particularly, with reference to flow chart 100 of FIG. 1, a live event such as but not limited to a sporting event which is to be broadcast to remote users generates various forms of raw data such as audio, video, and/or sensor data as shown at step 102. As will be described in more detail herein, a sensor that is configured to output the sensor data is associated with equipment utilized in the live event or is associated with one or more athletes participating in the live event. The raw data, *i.e.*, the raw audio, video, and/or sensor data, undergoes one or more treatments or processing as shown at step 104 such that one or more end devices can output the audio, video, and/or haptic data that is derived from the sensor data to a user as shown at step 106. Embodiments herein relate to architectures for reading, analyzing, and/or transforming haptic data that is derived from one or more sensors from the live event to an end user device. Haptic data as used herein includes sensor data that is used to create or that is converted to data conveying haptic information and thus haptic data relates to or is associated with the live event. More particularly, haptic data includes sensor data that is manually used to create data conveying haptic information (i.e., by a human designer or operator) as well as sensor data that is automatically converted to data conveying haptic information (i.e., by automatic conversion via one or more processors). The haptic data is a control signal that is fed or provided to a haptic output device or actuator of a haptic peripheral that plays or outputs the haptic effects. The haptic data is transmitted in an independent channel that is separate or independent from the audio and/or video transmission channel. Creating an independent channel for the haptic data provides versatility in the implantation and distinguishes various events that cannot necessarily be identified solely by audio or video data (i.e., when haptics is generated directly from audio or video data), thereby ensuring that these events are converted to haptic effects and do not go undetected.

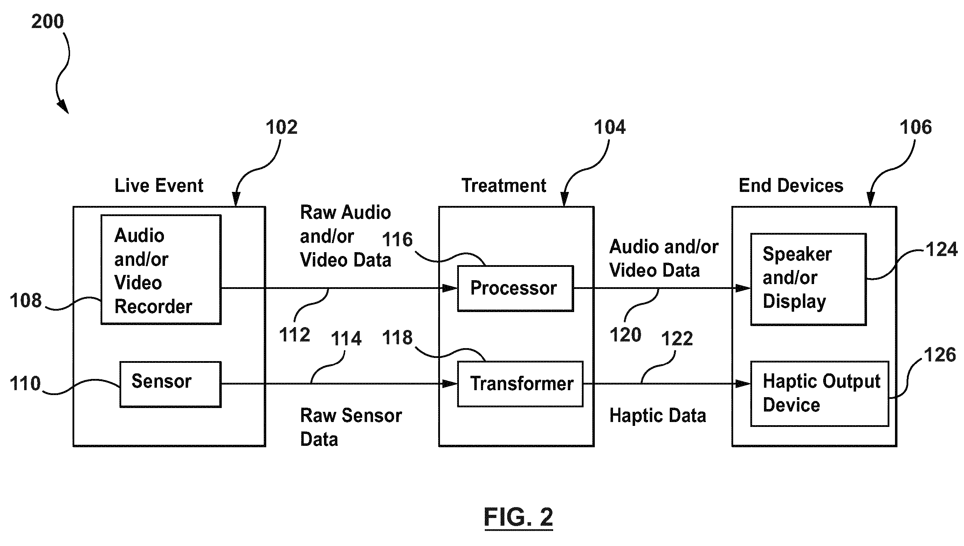

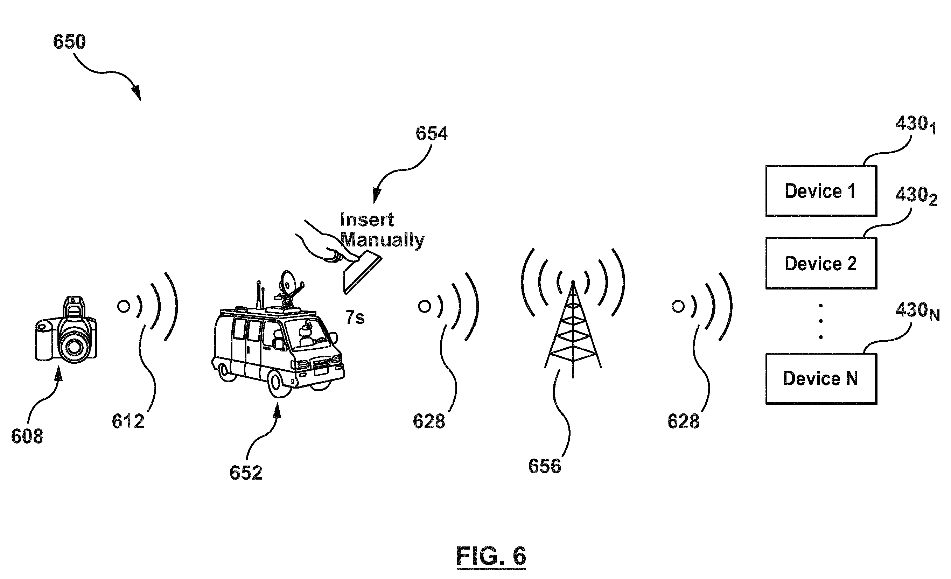

FIG. 2 illustrates a more detailed flow chart 200 which includes essential components utilized when transferring haptic data from a live event to an end user device. An audio and/or video recorder 108 is positioned at the live event in order to capture raw audio and/or video data, while a sensor 110 is positioned at the live event and associated with equipment utilized in the live event in order to capture raw sensor data. A signal 112 including the raw audio and/or video data is transmitted from audio and/or video recorder 108 to a processor or encoder 116, and a signal 114 including the raw sensor data is transmitted from sensor 110 to a processor or transformer 118. Processor or encoder 116 treats or processes signal 112 including the raw audio and/or video data, and a signal 120 including treated or processed audio and/or video data is transmitted or broadcast from processor or encoder 116 to an end user device having a speaker and/or display 124 for outputting the treated audio and/or video data, respectively. More particularly, the treatment of the raw audio and/or video data may be done automatically or manually through a human operator who can for example control the delay or the quality of the feed and/or can choose which audio feed or view angle to broadcast. Transformer 118 treats or processes signal 114 including the raw sensor data into haptic data, and a signal 122 including the haptic data is transmitted or broadcast from transformer 118 to an end user device having a haptic output device 126 for outputting the haptic data. In step 104, the treatment of signal 112 including the raw audio and/or video data is not required to be performed at the same time or place as the treatment of signal 114 including the raw sensor data. Architectures disclosed herein with respect to the embodiments of FIGS. 6-11 describe different times and places for the treatment of signal 114 including the raw sensor data.

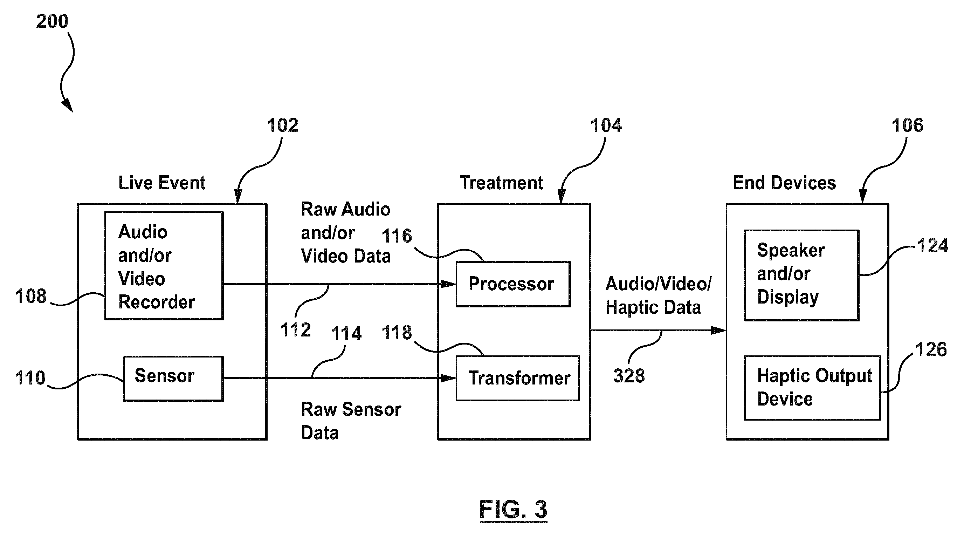

In the embodiment of FIG. 2, signal 120 including the treated or processed audio and/or video data and signal 122 including the haptic data are illustrated as separate or distinct signals delivered to the one or more end devices. However, in another embodiment hereof depicted in FIG. 3, a composite signal 328 that includes processed or treated audio and/or video data as well as haptic data (*i.e.,* sensor data that has been treated or processed by transformer 118) is delivered to the one or more end devices. Composite signal 328 includes video content or data, audio content or data, and haptic content or data, such portions being delivered either interleaved in temporal order, or such portions being delivered unordered but containing sequencing information that can be interpreted for reassembly in the correct temporal order for presentation to users by the end devices. An encoder (not shown) can take signal 122 including haptic data and encode it into signal 120 including processed audio and/or video data. Suitable encoders and methods for encoding are described in U.S. Patent Application Publication 2014/0347177 to Phan et al. (Attorney Docket No. IMM489), which is herein incorporated by reference. Encoding can be in the form of a dedicated track in a Moving Picture Experts Group ("MPEG") container or as unused/underutilized spectral components in the existing audio or video streams. The encoded stream may be distributed to remote viewers via over the air ("OTA") analog broadcast, satellite, Internet Protocol ("IP") networks, or other existing sporting transmission methods. The treated or processed audio and/or video data and the haptic data may take any form, i.e., separate or distinct signals or a composite signal, before and/or after any of the processing or transformation steps of architecture embodiments described herein. Stated another way, the haptic data and treated or processed audio and/or video data can be encoded together in the same container or feed or transmitted as separate feeds in any embodiment described herein. Further, a decoder may be present at any of the transformation or processing stages of architecture embodiments described herein to extract any of the feeds (i.e. Audio, Video, and Haptics) from a composite signal and then to process or transform the extracted feed. After processing or transformation, the transformed feed can be broadcasted as a separate feed or re-encoded into a composite signal with the assistance of an encoder. In addition, in any embodiment hereof, signals described herein (including signals 112, 114, 120, 122, and/or 328) may include metadata. In an embodiment, the metadata may be utilized for synchronization of the haptic effects and the audio and/or video data as described in U.S. Patent Publication No. 2008/0223627 to Lacroix et al. (Attorney Docket No. IMM250), and/or may be utilized for at least in part determining a haptic effect, an event, and/or an associated between a haptic effect and an event as described in U.S. Patent Publication No. 2013/0311811 to Birmbaum et al. (Attorney Docket No. IMM392), and/or may be utilized as otherwise described in U.S. Patent Publication No. 2014/0340209 to Lacroix et al. (Attorney Docket No. IMM459), each of which is herein incorporated by reference in their entirety.

In step 106 of FIG. 2 or FIG. 3, one or more end user devices are utilized to output the processed audio and/or video data and the haptic data. Stated another way, one or more end user devices decode the broadcast stream, *i.e.,* signals 120, 122, into video, audio, and haptic components and each component may be displayed or output by the same physical end user device or a different physical end user device (i.e., a computer or television for video, a speaker or headphone for audio, and a wearable haptic peripheral or a mobile device for haptic).

More particularly, in an embodiment, a single end user device may include speaker and/or display 124 as well as haptic output device 126 and may be utilized to output the processed audio and/or video data as well as the haptic data. For example, the remote user may be watching the sporting event on a mobile device such as a phone or tablet. In this embodiment, cellular or Wi-Fi technologies could be used for transmission and the visual, audio, and haptic content would be output via the same device. In another embodiment, the user may be watching the sporting event live in the stadium or arena. In this embodiment, the mobile device would provide additional immersion in the same location and would enhance the general atmosphere and setting of the game. The mobile device could be held in the user's hand, or kept in the user's pocket while still outputting haptic content.

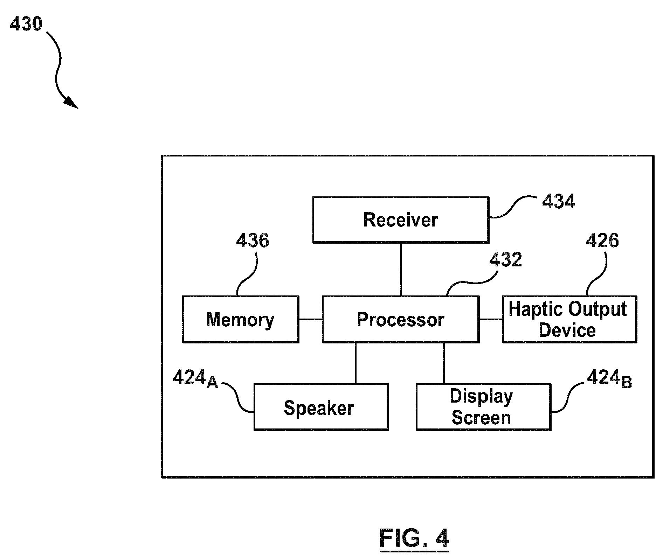

More particularly, FIG. 4 illustrates a block diagram of a single end user device 430 that includes a speaker 424_{A} for outputting sound content or data, a display screen 424_{B} for outputting video content or data, and a haptic output device 426 for outputting haptic content or data. In order to perceive or feel haptic effects, end user device 430 is a device that is held by a user, attached or coupled to a user, or otherwise has a surface that can convey haptic or tactile effects to a user. In an embodiment, end user device 430 is an electronic handheld device that includes haptic effect rendering capability, such as a mobile phone, tablet computer, gaming device, personal digital assistant ("PDA"), or the like. For example, end user device 430 may be a tablet computer well known and available in the market, such as an Apple® Ipad®, Kindle® Fire®, and Samsung® Galaxy Tab®. Other suitable devices for end user device 430 include but not limited to, personal digital assistants (PDA), computers, gaming peripherals, and other devices known to those skilled in the art.

As shown on the block diagram of FIG. 4, end user device 430 includes a receiver 434, a processor 432, a memory 436, haptic output device 426, display screen 424_{B}, and speaker 424_{A}. End user device 430 executes a software application that is stored in memory 436 and executed by processor 432. Processor 432 may be any type of general purpose processor, or could be a processor specifically designed to provide haptic effect signals. Memory 436 may be any type of storage device or computer-readable medium, such as but not limited to random access memory (RAM) or read-only memory (ROM). Memory 436 may also be located internal to the processor, or any combination of internal and external memory. Speaker 424_{A} may be for example speakers that are built into or coupled to end user device 430 such that end user device 430 has the ability to output audio via speaker 424_{A}. End user device 430 also has the ability to output video via display screen 424_{B}. Display screen 424_{B} may be coupled to end user device 430 or as known to those skilled in the art, end user device 430 and display screen 424_{B} may be combined into a single device. In addition, depending upon the type of broadcast signal being utilized, end user device 430 may include a built-in wired or wireless modem (not shown) for receiving streaming signals from the Internet.

In operation, receiver 434 of end user device 430 receives signal 122 including haptic data or receives composite signal 328 and recognizes the haptic component thereof. Signal 122 including haptic data or the haptic component of composite signal 328 is then routed or transmitted to processor 432. Signal 122 including haptic data or the haptic component of composite signal 328 may, for example, include a direct haptic effect stream or set of commands indicating which haptic effects must be performed. In response to receiving signal 122 including haptic data or the haptic component of composite signal 328, processor 432 instructs haptic output device 426 to provide or output one or more haptic effects to a user. Processor 432 can decide what haptic effects to send to haptic output device 426 and in what order to send the haptic effects. For example, signal 122 including haptic data or the haptic component of composite signal 328 may include voltage magnitudes and durations. In another example, signal 122 including haptic data or the haptic component of composite signal 328 may provide high level commands to processor 432 such as the type of haptic effect to be output (e.g. vibration, jolt, detent, pop, etc.) by haptic output device 426, whereby the processor 432 instructs haptic output device 426 as to particular characteristics of the haptic effect which is to be output (e.g. magnitude, frequency, duration, etc.). Processor 432 may retrieve the type, magnitude, frequency, duration, or other characteristics of the haptic effect from memory 436 coupled thereto. In another embodiment, signal 122 including haptic data or the haptic component of composite signal 328 may provide a code or an identification number to processor 432 which corresponds to a haptic effect that is stored previously in the memory of processor 432.

Haptic feedback enhances the user experience. As used herein, kinesthetic effects (such as active and resistive haptic feedback) and/or tactile effects (such as vibration, texture, and heat) are known collectively as "haptic feedback" or "haptic effects." The collective haptic effects provide the user with a greater sense of immersion to the audio-video content as multiple modalities are being simultaneously engaged, e.g., video, audio, and haptics. For example, vibration effects, or vibrotactile haptic effects, may be useful in providing cues to users to alert the user to specific events, or provide realistic feedback to create greater sensory immersion within a simulated or virtual environment. Processor 432 of end user device 430 may be running software algorithms that further tailor or tune the haptic data to optimize for the specific type of end user device 430 that is rendering the haptic data.

Haptic effects provided by haptic output device 426 may include but are not limited to transient effects such as detents or vibrations. Haptic output device 426 may be a physical and/or a non-physical actuator. Possible physical actuators include but are not limited to eccentric rotating mass ("ERM") actuators in which an eccentric mass is moved by a motor, linear resonant actuators ("LRAs") in which a mass attached to a spring is driven back and forth, piezoelectric actuators, electromagnetic motors in which an eccentric mass is moved by a motor, vibrotactile actuators, inertial actuators, or other suitable types of actuating devices. Possible non-physical actuators include but are not limited to electrostatic friction (ESF), ultrasonic surface friction (USF), and other non-physical actuators. In another embodiment, haptic output device(s) 426 may use kinesthetic haptic feedback including, for example, solenoids to change the stiffness/damping of the housing of end user device 430, small air bags that change size in the housing, or shape changing materials.

The haptic effects that are output by haptic output device 426 can include but are not limited to varying degrees of vibrations, varying degrees of detents, or other types of haptic effects. If the end user device includes multiple haptic actuators, processor 432 may determine at which haptic actuator each haptic effect is to be executed and provided to the user. In such an embodiment, high level haptic parameters or streaming values are generated in the software code stored in the memory of the end user device. The parameters or values are processed by the processor and the appropriate voltage level for each haptic actuator is thereby generated. This allows the end user device to provide the appropriate haptic effects to the user and vary the amount or type of haptic effects through the different voltage levels that are generated for each haptic output device 426.

In another embodiment, end user device 430 may be a wearable haptic peripheral that is configured to be coupled to or positioned adjacent to a user. For example, end user device 430 is not required to include speaker 424_{A} or display screen 424_{B} but rather may be configured to be attached to a user's body or attached to clothes or furniture that are positioned adjacent to a user such that the haptic output device(s) of the wearable haptic peripheral can deliver haptic effects to the user's relevant body part (i.e., the body part where the punch has landed).

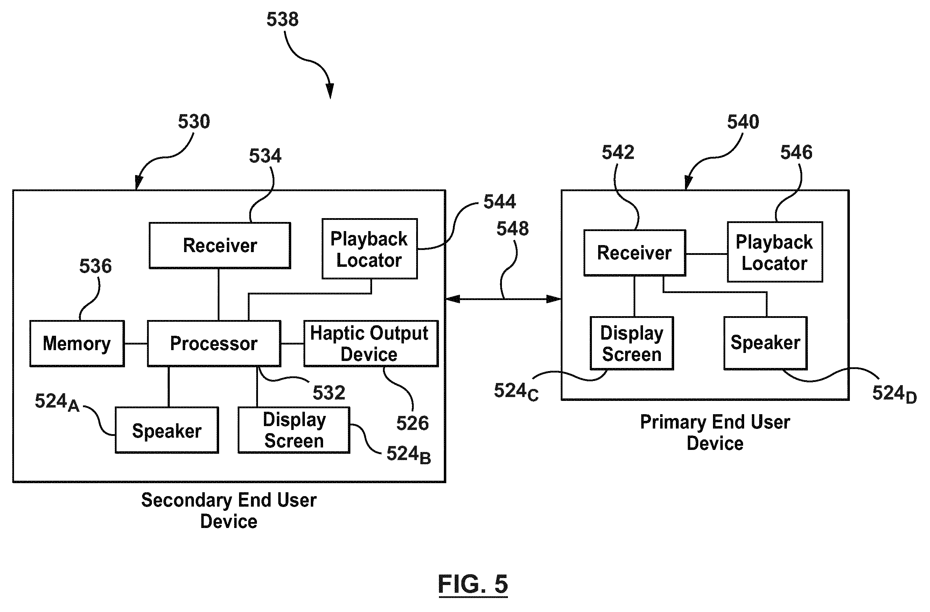

In another embodiment depicted in FIG. 5, a multi-device system 538 includes a first or primary end user device 540 such as a television to output the processed audio and/or video data and a secondary end user device 530 to output the haptic data. For example, the user may also be watching the sporting event on a large screen television, or primary end user device 540, but using secondary end user device 530 such as a phone, tablet, or remote control as a "second screen." During sporting events, second screens devices are increasingly used to view metadata or extended information about the event, such as sport statistics and advertising. In this embodiment, the video and/or audio data or content would be primarily consumed on the large screen of primary end user device 540 but haptic data or content could be experienced with secondary end user device 530. Secondary end user device 530 could be held in the user's hand, or kept in the user's pocket while still outputting haptic content. Various architectures for multi-device systems are described in U.S. Patent Provisional Patent Application 62/021,663 to Lacroix et al. (Attorney Docket No. IMM533P), entitled Second Screen Haptics, herein incorporated by reference in its entirety.

Primary end user device 540 is an audio-video display device such as a television or TV that is configured to output signal 120 including the processed audio and/or video data or the audio and/or video components of composite signal 328. As shown on the block diagram of FIG. 5, primary end user device 540 includes a receiver 542, a speaker 524_{D}, and a display screen 524c. Receiver 542 receives signal 120 including the processed audio and/or video data or the audio and/or video components of composite signal 328 and turns the signal into electrical signals that can be processed into an image and sound. Speaker 524_{D} may be for example speakers that are built into or coupled to primary end user device 540 and turn electrical signals into sound waves to play audio along with the video images. Primary end user device 540 thus outputs audio via speaker 524_{D}. Display screen 524c is configured to turn electrical signals into visible light and may be any type of medium that outputs video to a user; this includes but is not limited to monitors, television screens, plasmas, LCD_{S}, projectors, or any other display devices. Primary end user device 540 thus outputs video via display screen 524c. Audio-video display devices other than a TV may be used as primary end user device 540 including but not limited to smart phones, game consoles, personal digital organizers, notebook computers and other types of computers having a display screen coupled thereto. Depending upon the type of broadcast signal utilized, primary end user device 540 may include a built-in wired or wireless modem (not shown) for receiving streaming signals from the Internet. Although primary end user device 540 described above include a display screen and a sound device for outputting the audio and video content, respectively, the primary end user device may alternatively output only audio content (e.g., music without video content) or may alternatively output only video content (e.g., a silent film without audio content).

As shown on the block diagram of FIG. 5, secondary end user device 530 is similar to end user device 430 and includes a receiver 534, a processor 532, a memory 536, a haptic output device 526, a display screen 524_{B}, and a speaker 524_{A}. Secondary end user device 530 executes a software application that is stored in memory 536 and executed by processor 532. Processor 532 may be any type of general purpose processor, or could be a processor specifically designed to provide haptic effect signals. Memory 536 may be any type of storage device or computer-readable medium, such as but not limited to random access memory (RAM) or read-only memory (ROM). Memory 536 may also be located internal to the processor, or any combination of internal and external memory. Speaker 524_{A} may be for example speakers or headphones that are built into or coupled to secondary end user device 530 such that secondary end user device 530 has the ability to output audio via speaker 524_{A}. Secondary end user device 530 also has the ability to output video via display screen 524_{B}. In addition, depending upon the type of broadcast signal being utilized, secondary end user device 530 may include a built-in wired or wireless modem (not shown) for receiving streaming signals from the Internet. Although secondary end user device 530 described herein may include a display screen and/or a sound device for optionally outputting audio and/or video content, the secondary end user device is not required to have these components and functionalities. For example, in addition to haptic output, the secondary device may have video output, may have audio output, may have both video and audio output, or may have neither video nor audio output.

Multi-device system 538 may include means to ensure synchronization of the haptic content being output on secondary end user device 530 and the audio-video content being output on primary end user device 540. For example, primary end user device 540 and secondary end user device 530 may communicate directly with each other in order to ensure synchronization of the content being output on the respective devices. A playback locator signal 548 may be communicated between primary end user device 540 and secondary end user device 530 and function to determine a temporal reference point for signals 120, 122 or composite signal 328. The temporal reference point may be, for example, time-code, a counter, number of seconds of media playback consumed, current temporal playback position in the media file, or any other indication of playback position. A playback locator 546 of primary end user device 540 communicates a playback position on occasion to a playback locator 544 of secondary end user device 530, or vice versa, to ensure that the signal 120 or the audio and/or video component of signal 328 being output on a primary end user device 540 is rendered in a sufficiently synchronized fashion with signal 122 or the haptic component of signal 328 being output on a secondary end user device 530.

As previously mentioned, architectures disclosed herein with respect to the embodiments of FIGS. 6-11 describe different times and places for the treatment of signal 114 including the raw sensor data into haptic data. Stated another way, architectures disclosed herein with respect to the embodiments of FIGS. 6-11 describe at which stage along distribution chain that occurs from the live event location to the end user device the transformation of signal 114 having raw sensor data into signal 122 having haptic data or into the haptic component of composite signal 328 is going to take place.

FIG. 6 illustrates a broadcast haptics architecture 650 according to an embodiment hereof. In this embodiment, treatment or transformation into haptic data, *i.e.,* transformer 118 of FIG. 2 or FIG. 3, takes place at an onsite processing or transmission station 652. "Processing or transmission station" as used herein refers to a processing facility present or located onsite at live events for processing live signals including raw audio and/or video data.

In broadcast haptics architecture 650, an audio-video recorder 608 records live audio and video data at the live event. More particularly, audio-video recorder 608 is a recording device configured to record or capture both images as video data and record or capture sound as audio data such as but not limited to a video camcorder, a smart phone, or the like. In any architecture embodiment described herein, video and audio of a scene or event may be separately captured or recorded (i.e., the audio and video capabilities may be on separate or different devices), or only video may be captured or recorded, or only audio may be captured or recorded. Further, in any architecture embodiment described herein, the audio-video recorder may include a system of multiple video and/or audio recording devices for multiple video and/or audio feeds. Live signal 612 including the raw audio and/or video data is transmitted to onsite processing or transmission station 652. In order to review or process the raw audio and/or video data to determine that the content thereof is appropriate or suitable for broadcasting, there is a buffer period, e.g., seven seconds, before live signal 612 is broadcast from onsite processing or transmission station 652. In this embodiment, a human operator watches live signal 612 at onsite processing or transmission station 652 and inserts haptics effects manually within the buffer period as represented by insertion 654. Stated another way, the human operator authors haptic effects with known haptic effect authoring tools during the buffer period or mandated broadcast delay. With manual insertion of haptic effects, there is no need for smart equipment or sensors at the live event. Rather, the human operator inserts or embeds predetermined or associated haptic effects with corresponding events. As an example, the live event may be a boxing match and an operator is watching the match from onsite processing or transmission station 652. When the operator witnesses a head punch, she inserts the predetermined or associated head punch haptic effects in the transmission stream. As another example, the live event may be a tennis match and an operator is watching the match from onsite processing or transmission station 652. When the operator witnesses an athlete hit the ball, she inserts the predetermined or associated ball contact haptic effects in the transmission stream.

After live signal 612 including the raw audio and/or video data has been processed or reviewed at onsite processing or transmission station 652, and insertion 654 has taken place such that haptic effects are embedded into the transmission stream, composite signal 628 having both the processed audio and/or video data and embedded haptic data is transmitted to a broadcasting station 656. Broadcasting station 656 then transmits composite signal 628 having both the processed audio and/or video data and embedded haptic data to one or more end user devices 430. As shown on FIG. 6, composite signal 628 may be transmitted to multiple devices end user devices and thus end user devices 430 are depicted as end user device 430₁, end user device 430₂, and end user device 430_{N}. Although depicted as being transmitted to a single physical end user device 430 for output of the video, audio, and haptic components thereof, composite signal 628 may alternatively be transmitted to a multi-device system such as multi-device system 538 described herein. In another embodiment hereof, the manually inserted haptic effects are transmitted to end user devices 430 as a distinct or separate signal.

As described above, broadcast haptics architecture 650 does not require smart equipment or sensors at the live event due to the manual insertion of haptic effects. However, in another embodiment hereof, one or more sensors (not shown) record sensor data at the live event and a human operator receives the sensor data at onsite processing or transmission station 652. The manually inserted haptics effects as represented by insertion 654 may be based on the sensor data and/or live signal 612 including the raw audio and/or video data. Thus, in this embodiment, sensor data is captured and transmitted to onsite processing or transmission station 652 along with live signal 612 including the raw audio and/or video data. Exemplary sensors and sensed data to be utilized in this embodiment are described herein with respect to broadcast haptics architecture 750 and sensor 710.

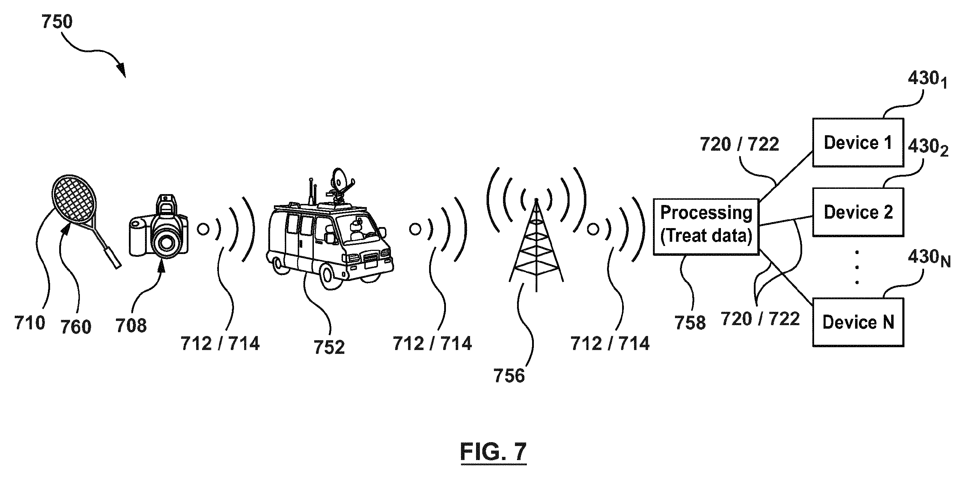

FIG. 7 illustrates a broadcast haptics architecture 750 according to another embodiment hereof. In this embodiment, treatment or transformation into haptic data, *i.e.,* transformer 118 of FIG. 2 or FIG. 3, takes place after processing of audio and/or video data at an onsite processing or transmission station 752 but before arrival at end user devices 430. Stated another way, treatment or transformation into haptic data is performed on an offsite processor located remote from the live event and from the end user device.

In broadcast haptics architecture 750, an audio-video recorder 708 records live audio and video data at the live event and a sensor 710 records sensor data at the live event. In any architecture embodiment described herein, the sensor may be a system of multiple sensors for multiple sensor feeds (i.e., although described as a single sensor, multiple sensors may be utilized). Broadly stated, sensor 710 is a sensor configured to sense a parameter of an object, equipment, or person associated with the live event and to convert the sensed parameter into sensor data. In an embodiment, sensor 710 is coupled or attached to a piece of equipment 760 that is utilized at the live event, such as a boxing glove, a soccer, ball, a tennis racket, a helmet, or other type of sporting event related items, and sensor 710 is configured to sense movement or speed of an object and convert the sensed movement into sensor data. Sensor 710 may be an accelerometer, a gyroscope, a contact pressure sensor, a Global Positioning System ("GPS") sensor, a rotary velocity sensor, or some other type of sensor that is configured to detect changes in acceleration, inclination, inertia, movement, or location. In another embodiment hereof, sensor 710 is associated with one or more athletes participating in the live event and may be a physiological signals (*i.e.,* plethysmograph) sensor. Physiological signals as used herein include any signals describing the physical or biological state of an athlete that might also be translated into his emotional state. For example, physiological signals include but are not limited to signals relating to galvanic skin response, blood pressure, body temperature, ECG signals, EMG signals, and/or EEG signals. In another embodiment, sensor 710 is configured to sense another parameter of an object or equipment associated with the live event and convert the sensed parameter into sensor data but is not required to be coupled to the object or equipment. For example, sensor 710 may be configured to record a specific audio and/or video signal or feed that is to be converted into haptic effects. For example, sensor 710 may be a dedicated microphone for capturing the specific noises (i.e., engine noises) that can be translated into haptic effects. Unlike signals from audio-video recorder 708, audio and/or video signals from sensor 710 are not broadcasted and are not used to deliver visual and auditory feedback but are solely used for haptic purposes.

In this embodiment, all of the raw data (i.e., raw video, audio, and sensor data) is simultaneously transferred to a remote or offsite location all at once for processing or transformation thereof. More particularly, live signal 712 including the raw audio and/or video data is transmitted to onsite processing or transmission station 752, and live signal 712 including the raw sensor data is also transmitted to onsite processing or transmission station 752. Without performing any processing thereon, onsite processing or transmission station 752 transmits live signals 712 and 714 having raw audio and/or video data and raw sensor data, respectively, to a broadcasting station 756. Broadcasting station 756 then transmits live signals 712 and 714 having raw audio and/or video data and raw sensor data, respectively, to a local or regional treatment station 758. Local or regional treatment station 758 includes a processor, *i.e.,* processor or encoder 116 of FIGS. 2 or 3, to review or process the raw audio and/or video data to determine that the content thereof is appropriate or suitable for broadcasting and also includes a processor or transformer, *i.e.,* transformer 118 of FIGS. 2 or 3, to transform the raw data from sensor 710 into haptic data. Local or regional treatment station 758 is remote from the live event and from the end user device. In another embodiment hereof, onsite processing or transmission station 752 includes a processor, *i.e.,* processor or encoder 116 of FIGS. 2 or 3, to review or process the raw audio and/or video data of live signal 712 to determine that the content thereof is appropriate or suitable for broadcasting while live signal 714 including the raw sensor data is processed or treated at local or regional treatment station 758 as described above.

In an embodiment, raw data from sensor 710 is transformed into haptic data that includes haptic event detections or identifications depending on the type of event and the accompanying sensor information such as force and intensity. Raw data from sensor 710 is converted from n (inputs) to haptic event detections or identifications represented as m (outputs) as described in more detail in U.S. Patent Application Publication 2015/0054727 to Saboune et al. (Attorney Docket No. IMM450), herein incorporated by reference in its entirety. The location, intensity, and nature of the haptic effect to be played can be relative to the characteristics of the haptic event identifications. For example, a knockout hit can be translated into a strong bump while a missed kick can be represented by a slight vibration. Other processing techniques for converting or transforming raw sensor data into a haptic data or commands may be utilized, which include but are not limited to, vibrations, surface friction modulation, skin pinch, skin squeeze, and the like. For example, U.S. Patent Application Publication 2014/0205260 to Lacroix et al. (Attorney Docket No. IMM439) and U.S. Patent Provisional Patent Application 61/968,799 to Saboune et al. (Attorney Docket No. IMM520P), each of which is herein incorporated by reference in their entirety, describe systems and methods for converting sensory data to haptic effects.

After local or regional treatment station 758 reviews or processes all of the raw data from signals 712, 714, local or regional treatment station 758 transmits the haptified live event to its local subscribers having end user devices 430. As shown on FIG. 7, local or regional treatment station 758 may simultaneously transmit two separate or distinct signals including signal 720 having processed audio and/or video data and signal 722 having haptic data. In another embodiment, local or regional treatment station 758 may further include an encoder (not shown) to take signal 722 including haptic data and encode it into signal 720 including processed audio and/or video data to form a composite signal that includes processed audio and/or video data as well as haptic data is delivered to the one or more end devices as described above with respect to FIG. 3. As shown on FIG. 7, signals 720, 722 may be transmitted to multiple devices end user devices and thus end user devices 430 are depicted as end user device 430₁, end user device 430₂, and end user device 430_{N}. Although depicted as being transmitted to a single physical end user device 430 for output of the video, audio, and haptic components thereof, signals 720, 722 may alternatively be transmitted to a multi-device system such as multi-device system 538 described herein.

As an example of broadcast haptics architecture 750, the live event is a soccer game which utilizes soccer balls equipped with sensors 710 that transmit signals including the raw sensor data through amplifiers (not shown) to onsite processing or transmission station 752. Onsite processing or transmission station 752 transmits the raw audio/video/sensor signals to numerous local or regional treatment stations 758. Local or regional treatment stations 758 process all the information and transmit the haptified live event to end user devices 430.

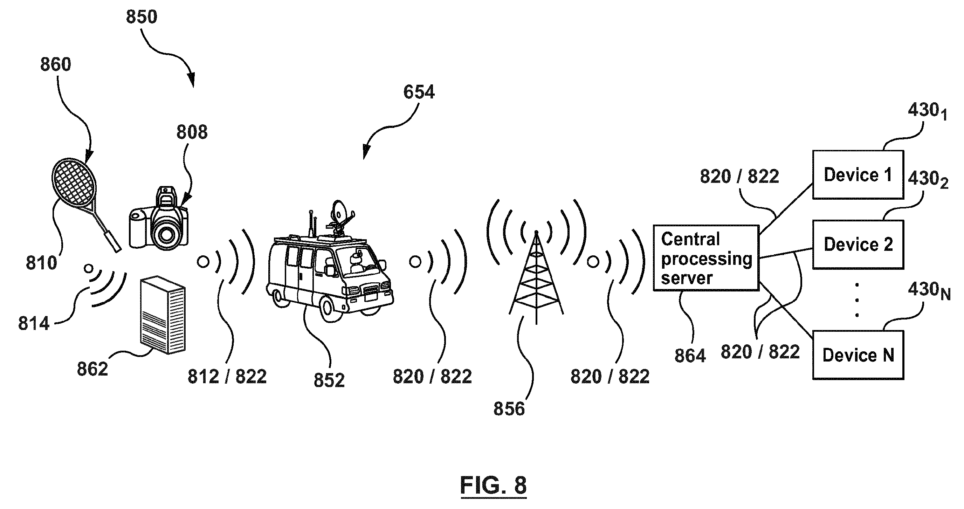

FIG. 8 illustrates a broadcast haptics architecture 850 according to another embodiment hereof. In this embodiment, treatment or transformation into haptic data, *i.e.,* transformer 118 of FIG. 2 or FIG. 3, takes place before or at the same time as processing of audio and/or video data at an onsite processing or transmission station 852.

In broadcast haptics architecture 850, an audio-video recorder 808 records live audio and video data at the live event and a sensor 810 records sensor data at the live event. Similar to sensor 710, sensor 810 is a sensor configured to sense a parameter of an object, equipment, or person associated with the live event and to convert the sensed parameter into sensor data. In an embodiment, sensor 810 is coupled or attached to a piece of equipment 860 that is utilized at the live event, such as a boxing glove, a soccer, ball, a tennis racket, a helmet, or other type of sporting event related items, and sensor 810 is configured to sense movement or speed of an object and convert the sensed movement into sensor data. Sensor 810 may be an accelerometer, a gyroscope, a contact pressure sensor, a Global Positioning System ("GPS") sensor, a rotary velocity sensor, or some other type of sensor that is configured to detect changes in acceleration, inclination, inertia, movement, or location. In another embodiment hereof, sensor 810 is associated with one or more athletes participating in the live event and may be a physiological signals (*i.e.,* plethysmograph) sensor. In another embodiment, sensor 810 is configured to sense another parameter of an object or equipment associated with the live event and convert the sensed parameter into sensor data but is not required to be coupled to the object or equipment as described above with respect to sensor 710.

In this embodiment, signal 814 having raw data from sensor 810 is first locally treated before or at onsite processing or transmission station 852 and then transmitted through onsite processing or transmission station 852 to a central processing server 864 responsible for distribution to different end user devices. More particularly, live signal 812 including the raw audio and/or video data is transmitted to onsite processing or transmission station 852, and live signal 814 including the raw sensor data is transmitted to an onsite transformer or processor 862. Onsite transformer or processor 862, *i.e.,* transformer 118 of FIGS. 2 or 3, transforms the raw data from sensor 810 into haptic data and then transmits signal 822 including the haptic data to onsite processing or transmission station 852. As described with respect to broadcast haptics architecture 750, raw data from sensor 810 may be transformed into haptic data that includes haptic event detections or identifications depending on the type of event and the accompanying sensor information such as force and intensity or other processing techniques for converting or transforming raw sensor data into a haptic data or commands may be utilized. Onsite transformer or processor 862 may be physically located in the same building or onsite as the live event, or may be located within onsite processing or transmission station 852.

Onsite processing or transmission station 852 includes a processor, *i.e.,* processor or encoder 116 of FIGS. 2 or 3, to review or process the raw audio and/or video data to determine that the content thereof is appropriate or suitable for broadcasting. Onsite processing or transmission station 852 then simultaneously transmits two separate or distinct signals including signal 820 having processed audio and/or video data and signal 822 having haptic data to a broadcasting station 856. Broadcasting station 856 transmits signals 820, 822 to a central processing server 864 that is responsible for distribution to different end user devices 430. As shown on FIG. 8, signals 820, 822 may be transmitted to multiple devices end user devices and thus end user devices 430 are depicted as end user device 430₁, end user device 430₂, and end user device 430_{N}. Although depicted as being transmitted to a single physical end user device 430 for output of the video, audio, and haptic components thereof, signals 820, 822 may alternatively be transmitted to a multi-device system such as multi-device system 538 described herein. In another embodiment, onsite processing or transmission station 852 or central processing server 864 may further include an encoder (not shown) to take signal 822 including haptic data and encode it into signal 820 including processed audio and/or video data to form a composite signal that includes processed or treated audio and/or video data as well as haptic data is delivered to the one or more end devices as described above with respect to FIG. 3.

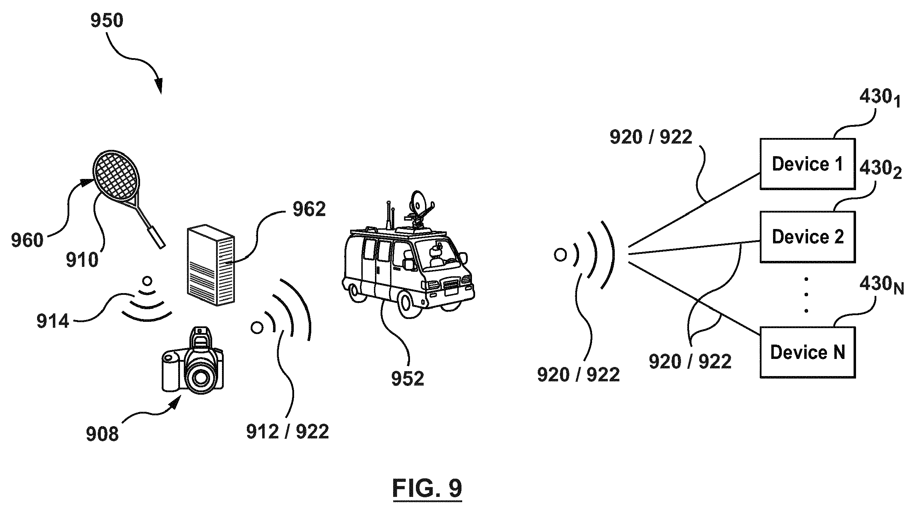

FIG. 9 illustrates a broadcast haptics architecture 950 according to another embodiment hereof. In this embodiment, treatment or transformation into haptic data, *i.e.,* transformer 118 of FIG. 2 or FIG. 3, takes place before or at the same time as processing of audio and/or video data at an onsite processing or transmission station 852.

In broadcast haptics architecture 950, an audio-video recorder 908 records live audio and video data at the live event and a sensor 910 records sensor data at the live event. Similar to sensor 710, sensor 910 is a sensor configured to sense a parameter of an object, equipment, or person associated with the live event and to convert the sensed parameter into sensor data. In an embodiment, sensor 910 is coupled or attached to a piece of equipment 960 that is utilized at the live event, such as a boxing glove, a soccer, ball, a tennis racket, a helmet, or other type of sporting event related items, and sensor 910 is configured to sense movement or speed of an object and convert the sensed movement into sensor data. Sensor 910 may be an accelerometer, a gyroscope, a contact pressure sensor, a Global Positioning System ("GPS") sensor, a rotary velocity sensor, or some other type of sensor that is configured to detect changes in acceleration, inclination, inertia, movement, or location. In another embodiment hereof, sensor 910 is associated with one or more athletes participating in the live event and may be a physiological signals (*i.e.,* plethysmograph) sensor. In another embodiment, sensor 910 is configured to sense another parameter of an object or equipment associated with the live event and convert the sensed parameter into sensor data but is not required to be coupled to the object or equipment as described above with respect to sensor 710.

In this embodiment, signal 914 having raw data from sensor 910 is first locally treated before or at onsite processing or transmission station 952 and then transmitted through onsite processing or transmission station 952 to directly to different end user devices without a central processing server as described in the embodiment of FIG. 8. Each end user device 430 acts as its own server, by playing the streaming processed audio and/or video data via signal 920 and the haptic data via signal 922. The advantage of broadcast haptics architecture 950 over broadcast haptics architecture 850 is the transmission to local nearby end user devices if this is desired. As an example, the live event is a tennis match which utilizes rackets equipped with sensors 910 that transmit acceleration and gyroscope information. The raw sensor data or signal 914 is treated at an onsite transformer or processor 962 in the stadium and then the haptic data via signal 922 is transmitted through onsite processing or transmission station 952 with the processed audio and/or video data via signal 920 to people having end user devices around the stadium who could not get into the stadium because tickets to the live event are sold out. The nearby people are watching the match on their phones or tablets and feeling the haptic effects according to signal 922 having the haptic data.

More particularly, live signal 912 including the raw audio and/or video data is transmitted to onsite processing or transmission station 952, and live signal 914 including the raw sensor data is transmitted to onsite transformer or processor 962. Onsite transformer or processor 962 *i.e.,* transformer 118 of FIGS. 2 or 3, transforms the raw data from sensor 910 into haptic data and then transmits signal 922 including the haptic data to onsite processing or transmission station 952. As described with respect to broadcast haptics architecture 750, raw data from sensor 910 may be transformed into haptic data that includes haptic event detections or identifications depending on the type of event and the accompanying sensor information such as force and intensity or other processing techniques for converting or transforming raw sensor data into a haptic data or commands may be utilized. Onsite transformer or processor 962 may be physically located in the same building or onsite as the live event, or may be located within onsite processing or transmission station 952.

Onsite processing or transmission station 952 includes a processor, *i.e.,* processor or encoder 116 of FIGS. 2 or 3, to review or process the raw audio and/or video data to determine that the content thereof is appropriate or suitable for broadcasting. Onsite processing or transmission station 952 then simultaneously directly distributes two separate or distinct signals including signal 920 having processed audio and/or video data and signal 922 having haptic data to different end user devices 430. As shown on FIG. 9, signals 920, 922 may be transmitted to multiple devices end user devices and thus end user devices 430 are depicted as end user device 430₁, end user device 430₂, and end user device 430_{N}. Although depicted as being transmitted to a single physical end user device 430 for output of the video, audio, and haptic components thereof, signals 920, 922 may alternatively be transmitted to a multi-device system such as multi-device system 538 described herein. In another embodiment, onsite processing or transmission station 952 may further include an encoder (not shown) to take signal 922 including haptic data and encode it into signal 920 including processed audio and/or video data to form a composite signal that includes processed or treated audio and/or video data as well as haptic data is delivered to the one or more end devices as described above with respect to FIG. 3.

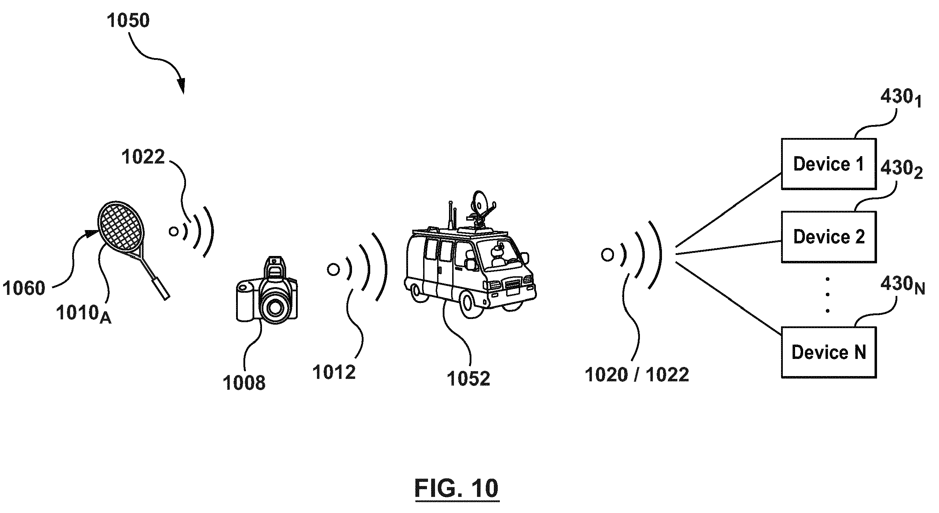

FIG. 10 illustrates a broadcast haptics architecture 1050 according to another embodiment hereof. In this embodiment, treatment or transformation into haptic data, *i.e.,* transformer 118 of FIG. 2 or FIG. 3, takes place before processing of audio and/or video data at an onsite processing or transmission station 1052.

In broadcast haptics architecture 1050, an audio-video recorder 1008 records live audio and video data at the live event and a sensor 1010_{A} records sensor data at the live event. Sensor 1010_{A} is similar to sensor 710 except that sensor 1010_{A} includes a microprocessor or microcontroller, *i.e.,* transformer 118 of FIGS. 2 or 3, configured to transforms the raw data from sensor 1010_{A} into haptic data as will be described in more detail below. Sensor 1010_{A} is a sensor configured to sense a parameter of an object, equipment, or person associated with the live event and to convert the sensed parameter into sensor data. In an embodiment, sensor 1010_{A} is coupled or attached to a piece of equipment 1060 that is utilized at the live event, such as a boxing glove, a soccer, ball, a tennis racket, a helmet, or other type of sporting event related items, and sensor 1010_{A} is configured to sense movement or speed of an object and convert the sensed movement into sensor data. Sensor 1010_{A} may be an accelerometer, a gyroscope, a contact pressure sensor, a Global Positioning System ("GPS") sensor, a rotary velocity sensor, or some other type of sensor that is configured to detect changes in acceleration, inclination, inertia, movement, or location. In another embodiment hereof, sensor 1010_{A} is associated with one or more athletes participating in the live event and may be a physiological signals (*i.e.,* plethysmograph) sensor. In another embodiment, sensor 1010_{A} is configured to sense another parameter of an object or equipment associated with the live event and convert the sensed parameter into sensor data but is not required to be coupled to the object or equipment. For example, sensor 1010_{A} may be configured to record a specific audio and/or video signal or feed that is to be converted into haptic effects as described above with respect to sensor 710.

In this embodiment, transformation of sensor signals takes place inside the sensor itself. Sensor 1010_{A} includes a microprocessor or microcontroller configured to process the raw sensor data and transform the raw sensor data into haptic data. The advantage of broadcast haptics architecture 1050 is that local sensor processing may result in improved or better haptic event detections or identifications due to the local higher loop rate. As described with respect to broadcast haptics architecture 750, raw data from sensor 1010_{A} may be transformed into haptic data that includes haptic event detections or identifications depending on the type of event and the accompanying sensor information such as force and intensity or other processing techniques for converting or transforming raw sensor data into a haptic data or commands may be utilized.

More particularly, live signal 1012 including the raw audio and/or video data is transmitted to onsite processing or transmission station 1052, and signal 1022 including the haptic data is transmitted to onsite processing or transmission station 1052. Onsite processing or transmission station 1052 includes a processor, *i.e.,* processor or encoder 116 of FIGS. 2 or 3, to review or process the raw audio and/or video data to determine that the content thereof is appropriate or suitable for broadcasting. Onsite processing or transmission station 1052 then simultaneously transmits two separate or distinct signals including signal 1020 having processed audio and/or video data and signal 1022 having haptic data to different end user devices 430. As shown on FIG. 10, signals 1020, 1022 may be transmitted to multiple devices end user devices and thus end user devices 430 are depicted as end user device 430₁, end user device 430₂, and end user device 430_{N}. Although depicted as being transmitted to a single physical end user device 430 for output of the video, audio, and haptic components thereof, signals 1020, 1022 may alternatively be transmitted to a multi-device system such as multi-device system 538 described herein. In another embodiment, onsite processing or transmission station 1052 may further include an encoder (not shown) to take signal 1022 including haptic data and encode it into signal 1020 including processed audio and/or video data to form a composite signal that includes processed or treated audio and/or video data as well as haptic data is delivered to the one or more end devices as described above with respect to FIG. 3.

Although not shown, broadcast haptics architecture 1050 may further include a broadcasting station and/or a central processing server for distribution to the end user devices. More particularly, onsite processing or transmission station 1052 may simultaneously transmit two separate or distinct signals including signal 1020 having processed audio and/or video data and signal 1022 having haptic data to the broadcasting station, and then the broadcasting station may transmit signals 1020, 1022 to the central processing server that is responsible for distribution to different end user devices 430. Stated another way, the method of delivery of signals 1020, 1022 to different end user devices 430 may be achieved as described in any of the previous embodiments, i.e., as described with respect to broadcast haptics architecture 850 of FIG. 8 or broadcast haptics architecture 950 of FIG. 9.

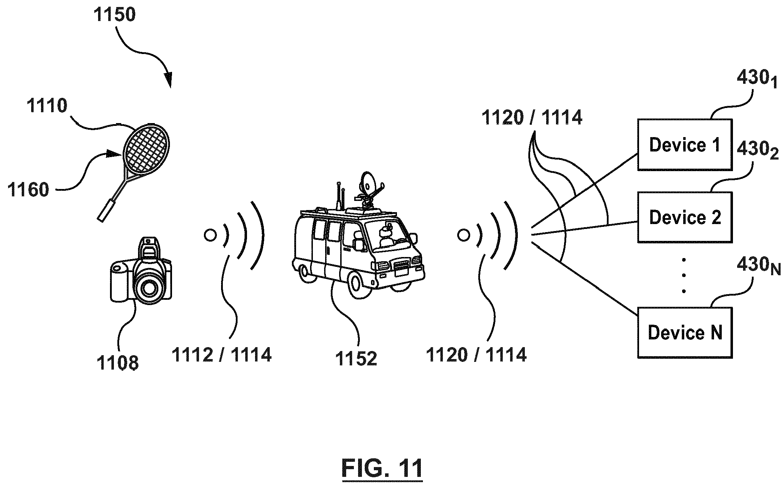

FIG. 11 illustrates a broadcast haptics architecture 1150 according to another embodiment hereof. In this embodiment, treatment or transformation into haptic data, *i.e.,* transformer 118 of FIG. 2 or FIG. 3, takes place at the processors of end user devices 430. Although least efficient from a band-width point of view since signal 1114 having raw sensor data are fully transmitted all the way to end user devices 430, broadcast haptics architecture 1150 is the most efficient from a processing point of view as all of the transformation/processing of the sensor data is offloaded to the endpoint.

In broadcast haptics architecture 1150, an audio-video recorder 1108 records live audio and video data at the live event and a sensor 1110 records sensor data at the live event. Sensor 1110 is similar to sensor 710 and sensor 1110 is a sensor configured to sense a parameter of an object, equipment, or person associated with the live event and to convert the sensed parameter into sensor data. In an embodiment, sensor 1110 is coupled or attached to a piece of equipment 1160 that is utilized at the live event, such as a boxing glove, a soccer, ball, a tennis racket, a helmet, or other type of sporting event related items, and sensor 1110 is configured to sense movement or speed of an object and convert the sensed movement into sensor data. Sensor 1110 may be an accelerometer, a gyroscope, a contact pressure sensor, a Global Positioning System ("GPS") sensor, a rotary velocity sensor, or some other type of sensor that is configured to detect changes in acceleration, inclination, inertia, movement, or location. In another embodiment hereof, sensor 1110 is associated with one or more athletes participating in the live event and may be a physiological signals (*i.e.*, plethysmograph) sensor. In another embodiment, sensor 1110 is configured to sense another parameter of an object or equipment associated with the live event and convert the sensed parameter into sensor data but is not required to be coupled to the object or equipment as described above with respect to sensor 710.

Live signal 1112 including the raw audio and/or video data is transmitted to onsite processing or transmission station 1152, and signal 1114 including the raw data from sensor(s) 1160 is also transmitted to onsite processing or transmission station 1152. Onsite processing or transmission station 1152 includes a processor, *i.e.,* processor or encoder 116 of FIGS. 2 or 3, to review or process the raw audio and/or video data to determine that the content thereof is appropriate or suitable for broadcasting. Onsite processing or transmission station 1152 then simultaneously transmits two separate or distinct signals including signal 1120 having processed audio and/or video data and signal 1114 including the raw data from sensor(s) 1160 to different end user devices 430. As shown on FIG. 11, signals 1120, 1114 may be transmitted to multiple devices end user devices and thus end user devices 430 are depicted as end user device 430₁, end user device 430₂, and end user device 430_{N}. Although depicted as being transmitted to a single physical end user device 430 for output of the video, audio, and haptic components thereof, signals 1120, 1114 may alternatively be transmitted to a multi-device system such as multi-device system 538 described herein.

Although not shown, broadcast haptics architecture 1150 may further include a broadcasting station and/or a central processing server for distribution to the end user devices. More particularly, onsite processing or transmission station 1152 may simultaneously transmit two separate or distinct signals including signal 1120 having processed audio and/or video data and signal 1114 including the raw data from sensor(s) 1160 to the broadcasting station, and then the broadcasting station may transmit signals 1120, 1114 to the central processing server that is responsible for distribution to different end user devices 430. Stated another way, the method of delivery of signals 1120, 1122 to different end user devices 430 may be achieved as described in any of the previous embodiments, i.e., as described with respect to broadcast haptics architecture 850 of FIG. 8 or broadcast haptics architecture 950 of FIG. 9. Signals 1120, 1122 may be distributed locally to the attendees of the live event or in another embodiment may be transmitted through a broadcasting station and/or a central processing before reaching remote end user devices.

While various embodiments according to the present invention have been described above, it should be understood that they have been presented by way of illustration and example only, and not limitation. It will be apparent to persons skilled in the relevant art that various changes in form and detail can be made therein without departing from the spirit and scope of the invention. For example, although architectures described herein include transmission or broadcasting of video and/or audio data along with haptic data for a live event, architectures described herein may be modified to broadcast only haptic data from a live event similar to the way radios broadcast only audio data. For example, broadcasting haptic data only may be utilized in a sports game in which the score thereof is haptically broadcast every minute or other predetermined time, or the score thereof is haptically broadcast every time a score changes. Thus, the breadth and scope of the present invention should not be limited by any of the above-described exemplary embodiments, but should be defined only in accordance with the appended claims and their equivalents. It will also be understood that each feature of each embodiment discussed herein, and of each reference cited herein, can be used in combination with the features of any other embodiment. All patents and publications discussed herein are incorporated by reference herein in their entirety.

## Claims

1. A system for transferring haptic data from a live event to an end user device comprising:
a recorder configured to record video data of a live event;
a sensor configured to sense a parameter associated with the live event and output the sensed parameter as sensor data;
a transformer configured to receive the sensor data from the sensor and transform the sensor data into a signal including haptic data that is associated with the live event; and
an end user device configured to receive the haptic data from the transformer and configured to receive the video data of the live event, wherein the end user device includes a haptic output device configured to generate a haptic effect to a user based on the haptic data and includes a display configured to display the video data.

2. The system of claim 1, wherein the transformer is a microcontroller located on the sensor or wherein the transformer is a processor located within the end user device.

3. The system of claim 1, further comprising:
an onsite transmission station located onsite with the live event, wherein the onsite transmission station includes a processor for processing the video data of the live event.

4. The system of claim 3, wherein the transformer is an onsite processor located onsite with the live event or within the onsite transmission station and is configured to transmit the haptic data to the onsite transmission station.

5. The system of claim 4, further comprising:
a broadcasting station, wherein the broadcasting station is configured to receive the processed video data and the haptic data from the onsite transmission station.

6. The system of claim 5, wherein a central processing server is configured to receive the processed video data and the haptic data from the broadcasting station and is configured to transmit the processed video data and the haptic data to the end user device.

7. The system of claim 4, wherein onsite transmission station is configured to transmit the processed video data and the haptic data to the end user device.

8. The system of claim 1, further comprising:
an onsite transmission station located onsite with the live event, wherein the onsite transmission station is configured to receive the video data of the live event and the sensor data from the sensor;
a broadcasting station configured to receive the video data of the live event and the sensor data from the onsite transmission station; and
a regional treatment station configured to receive the video data and the sensor data from the broadcasting station, wherein the transformer is a processor located in the regional treatment station and the regional treatment station is configured to transmit the haptic data to the end user device.

9. The system of claim 8, wherein the regional treatment station also includes a second processor configured to process the video data of the live event and the regional treatment station is configured to transmit the processed video data and the haptic data to the end user device.

10. The system of claim 1, wherein the end user device includes a primary end user device including the display and a secondary user device including the haptic output device.

11. The system of claim 1, wherein the recorder is also configured to record audio data of the live event along with the video data and the end user device includes a speaker configured to output the audio data.

12. The system according to claim 1, wherein the sensor is coupled to a piece of equipment utilized in the live event or a participant of the live event.

13. The system of claim 1 further comprising:
an onsite transmission station located onsite with the live event, the onsite transmission station being configured to receive the video data of the live event, wherein the onsite transmission station includes a processor for processing the video data of the live event;
and wherein the end user device is configured to receive the processed video data from the processor of the onsite transmission station.

14. A method of transferring haptic data from a live event to an end user device, the method comprising the steps of:
recording video data of a live event;
sensing a parameter associated with the live event and outputting the sensed parameter as sensor data;
receiving the sensor data from the sensor and transforming the sensor data into a signal including haptic data that is associated with the live event; and
receiving the haptic data at an end user device, wherein the end user device includes a display configured to display the video data;
receiving the video data of the live event at the end user device, wherein the end user device includes a haptic output device configured to generate a haptic effect to a user based on the haptic data;
generating at least one haptic effect with the haptic output device based on the haptic data; and
displaying the video data on the display.

15. The method of claim 14, wherein the step of receiving the sensor data from the sensor and transforming the sensor data into a signal including haptic data is performed on a microcontroller located on the sensor or
wherein the step of receiving the sensor data from the sensor and transforming the sensor data into a signal including haptic data is performed on a processor located within the end user device or
wherein the step of receiving the sensor data from the sensor and transforming the sensor data into a signal including haptic data is performed on an onsite processor located onsite with the live event or within an onsite transmission station located onsite with the live event or
wherein the step of receiving the sensor data from the sensor and transforming the sensor data into a signal including haptic data is performed on offsite processor located remote from the live event and from the end user device.
